# EUROPÄISCHE PATENTANMELDUNG

(11) **EP 1 354 506 A1**
(43) Veröffentlichungstag der Anmeldung: **22.10.2003**
(21) Anmeldenummer: 03007510.5
(22) Anmeldetag: 01.04.2003
(51) Int. Cl.: A01B 1/00

(54) **Haltestiel für drehend zur Wirkung zu bringende Erdbodenbearbeitungselemente**

(30) Priorität: 15.04.2002 DE 20205832 U
(71) Anmelder: Sandholzer, Hartwig, 87747 Buchenberg (DE)
(72) Erfinder: Sandholzer, Hartwig, 87747 Buchenberg (DE)
(74) Vertreter: Wolf, Günter, Dipl.-Ing.

(57) **Zusammenfassung**

Die Erfindung betrifft einen Haltestiel für drehend zur Wirkung zu bringende Erdbodenbearbeitungselemente (1), wie Erdbohrer, Bodenauflockerungsgeräte, Pflanzlochstecher od.dgl., bestehend aus einem quer am oberen Ende des Stieles (2) angeordneten, in Schritten verrast- und zum Stiel (2) drehbaren, doppelarmigen Griff (3). Erfindungsgemäß ist der Griff (3) mittels eines in das hohle obere Ende des Stieles (2) eingreifenden und mittig am Griff (3) angeordneten Zapfens (4) durch Drehung begrenzt axial zum Stiel (2) verstellbar. Am Zapfen (4) und am Stiel (2) sind axial gegeneinander gerichtete, miteinander in Eingriff bringbare Schrägverzahnungen (5,5') angeordnet.

## Beschreibung

Die Erfindung betrifft einen Haltestiel für drehend zur Wirkung zu bringende Erdbodenbearbeitungselemente, wie Erdbohrer, Bodenauflockerungsgeräte, Pflanzlochstecher od.dgl., bestehend aus einem quer am oberen Ende des Stieles angeordneten, in Schritten verrast- und zum Stiel drehbaren Griff, insbesondere zweiarmigen Griff.

Haltestiele der genannten Art sind bspw. nach dem DE-A-200 12 244 U1 bekannt, bei dessen Gegenstand es sich um ein Handgerät mit Ratschenhandgriff zum Bearbeiten von Gartenböden handelt, wobei am unteren Ende des Stieles gabelartige Klauen bzw. Zinken als Erdbodenbearbeitungselemente angeordnet sind, mit denen der Boden drehend aufgelockert werden soll. Bezgl. solcher Bodenbearbeitungselemente wird der Vollständigkeit halber bspw. auf US-A-2,809,067; US-A-3,129,771 und US-A-4,905,768 verwiesen. Bezgl. des vorerwähnten DE-A-200 12 244 U1 ist eine so genannte, unter Federbelastung stehende Ratschen-Freilaufmechanik in einem einen doppelarmigen Handgriff bildenden Querrohr eingebaut. Das eigentliche Ratschenglied steht mit dem sägezahnartig grob gerändelten oberen Ende des Gerätestiels derart in Wirkverbindung, daß der Handgriff in Bezug auf den Stiel frei zurück und unter Mitnahme des Stiels entgegengesetzt gedreht werden kann. Dieses Gerät mag zwar funktionieren, ist aber insofern nachteilig, als es eine bruchgefährtete Feder verlangt, die eine im Griff eingebaute Ratschenklinke gegen das mit einer Ratschenverzahnung versehen Ende des Gerätestieles im Eingriff hält. Durch den Eingriff des Stielendes in das den Handgriff bildende Rohr ist dieses zwangsläufig entsprechend geschwächt und damit verbiegungsgefährdet. Außerdem muß noch dafür gesorgt werden, daß der zweiarmige Handgriff drehbar auf dem Stielende fixiert und geführt ist, dafür aber denkbar ungünstige Verhältnisse für eine Lagerung bzw. Führung des Griffrohres vorliegen, das ja bei Benutzung ständig in Bezug auf den Stiel hin und her gedreht werden muß.

Ausgehend von einem Haltestiel der eingangs genannten Art liegt der Erfindung die Aufgabe zugrunde, diesen dahingehend zu verbessern, daß dieser trotz Beibehaltung des Ratschenprinzips keiner Feder bedarf und der Griff in Bezug auf das obere Ende des Stieles belastbar gut geführt ist.

Diese Aufgabe ist mit einem Haltestiel der eingangs genanten Art nach der Erfindung dadurch gelöst, daß der Griff mittels eines in das hohle obere Ende des Stieles eingreifenden und mittig am Griff angeordneten Zapfens begrenzt axial zum Stiel verstellbar ist und daß am Zapfen und am Stiel axial gegeneinander gerichtete, miteinander im Eingriff stehende und Zapfen und Stiel ringförmig umgebende Schrägverzahnungen angeordnet sind.

Unter "begrenzt axial zum Stiel verstellbar" ist dabei ein Maß zu verstehen, um das die beiden Schrägverzahnungen außer Eingriff gebracht werden können, um den Handgriff zurückdrehen zu können. Dieses außer Ineingriffbringen erfolgt automatisch beim Zurückdrehen des Handgriffes, da sich dabei die handgriffseitige Schrägverzahnung an der stielseitigen Schrägverzahung abstützt und via Aufgleiten auf den schiefen Ebenen der Verzahnungen entsprechend anhebt. Eine Feder ist dabei vorteilhaft nicht erforderlich, da sich die obere Verzahnung nach Ende des Zurückdrehens sofort wieder in die stielseitige Verzahnung einsetzt, wonach beim Vorwärtsdrehen des Handgriffes der Stiel direkt wieder drehend mitgenommen wird. Abgesehen davon, daß für diesen Vorgang keine Feder erforderlich ist, steht der doppelarmige Handgriff über eine stabile Axiallagerung mit dem Stiel in Verbindung, was noch näher erläutert wird.

Vorteilhafte Weiterbildungen, die insbesondere auf eine möglichst einfache und kostengünstige Herstellbarkeit zielen, bestehen darin, daß zum Einen der Zapfen in einem am Griff angeordneten Rohrstück angeordnet ist, aus diesem herausragt und in den aus entsprechendem Rohr gebildeten Stiel mit seinem herausragendem Endstück eingreift, und zum Anderen darin, daß die den Zapfen und den Stiel umgebenden Schrägverzahnungen die Stirnflächen zweier Hülsen bilden, von denen die eine am Rohrstück des Handgriffes und die andere benachbart dazu am Stiel befestigt ist.

Der erfindungsgemäße Haltestiel und vorteilhafte Weiterbildungen werden nachfolgend anhand der zeichnerischen Darstellung von Ausführungsbeispielen näher erläutert.

Es zeigt schematisch
- Fig.1: in Ansicht den Haltestiel;
- Fig.2: teilweise im Schnitt und in Ansicht das Oberteil des Haltestieles;
- Fig.3: das Unterteil des Haltestieles;
- Fig.4: eine Draufsicht auf die Schrägverzahnungen;
- Fig.5: im Schnitt eine besondere Ausführungsform der Schrägverzahnungen und
- Fig.6: stark vergrößert und teilweise im Schnitt und in Ansicht eine bevorzugte Ausführungsform des Haltestieles.

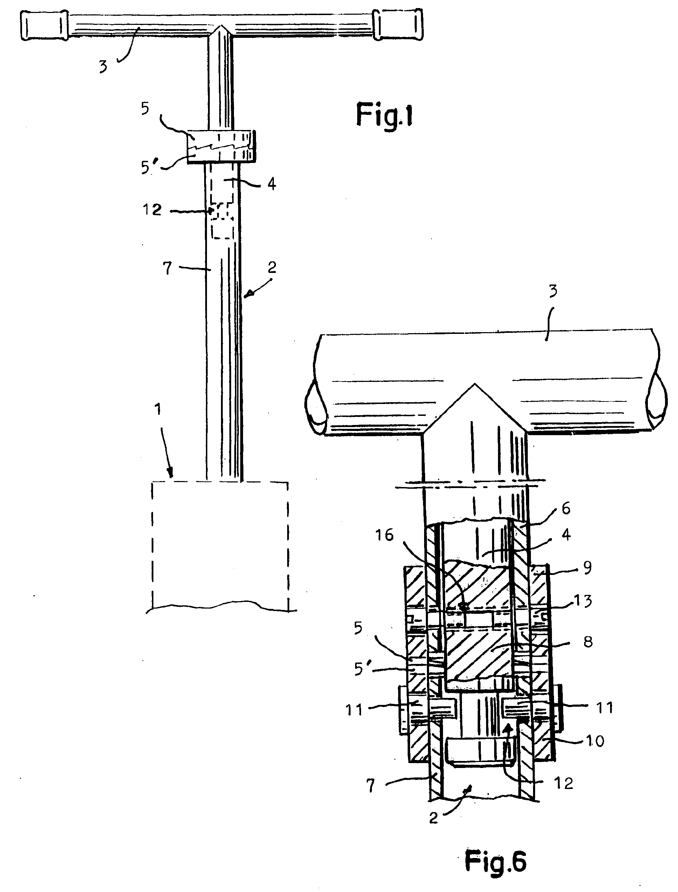

Der Haltestiel besteht nach wie vor aus einem quer am oberen Ende des Stieles 2 angeordneten, in Schritten verrast- und zum Stiel 2 drehbaren, doppelarmigen Griff 3. Das Erdbodenbearbeitungselement 1 ist in Fig.1 nur schematisch und gestrichelt angedeutet.
Die Fig.1 verdeutlicht im übrigen das wesentliche und erfindungsgemäße Bauprinzip, nämlich dahingehend, daß der Griff 3 mittels eines in das hohle obere Ende des Stieles 2 eingreifenden und mittig am Griff angeordneten Zapfens 4 begrenzt axial zum Stiel 2 verstellbar ist und daß am Zapfen 4 und am Stiel 2 axial gegeneinander gerichtete, miteinander in Eingriff brinbare und Zapfen 4 und Stiel 2 ringförmig umgebende sägezahnartige Schrägverzahnungen 5,5' angeordnet sind.
Bei Drehung des Griffes 3 im Gegenuhrzeigersinn ratscht also unter geringfügiger axialer Anhebung die obere Verzahnung 5 über die untere Verzahnung 5', die dann bei Drehrichtungswechsel im Uhrzeigersinn mitgenommen wird und das Bearbeitungselement 1 am unteren Ende des Stieles 2 mitnimmt. Die Darstellung des Haltestieles in Fig.1 stellt insoweit auch die einfachste Ausführungsform der Erfindung dar, da hierbei der Zapfen 4 unmittelbar selbst intergrales Bauteil des Griffes 3 ist.

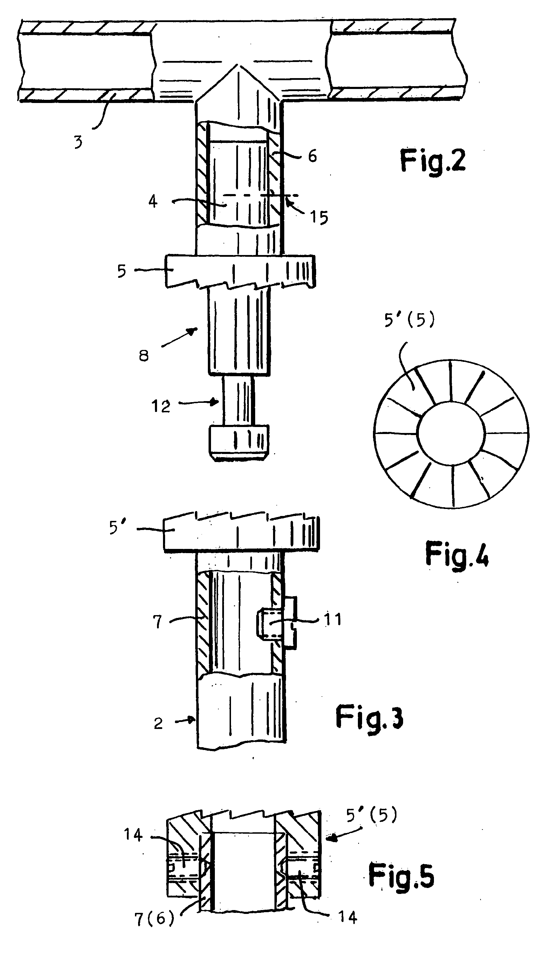

Bei der Darstellung gemäß Fig.2 sind der Zapfen 4 und das die obere Schrägverzahnung 5 aufweisende Element bspw. aus einem Stück gebildet. Das unter der Schrägverzahnung 5 herausragende Ende 8 des Zapfens 4 ist mit einer umlaufenden Nut 12 versehen, in die, wenn das Ende 8 in das Rohr 7 des Stieles 2 eingesteckt ist, mindestens eine Schraube 11 (siehe Fig.3) als axialer Verstellanschlag eingreift. Diese mindestens eine Schraube 11 hält also den Stiel 2 und den Handgriff 3 zusammen. Abgesehen davon, daß der Zapfen 4, wie vorerwähnt, direkt im Sinne der Fig. 1 am Handgriff 3 befestigt bzw. mit diesem verschweißt sein könnte, weist der Handgriff 3 bei dieser Ausführungsform ein Rohrstück 6 auf, in das der Zapfen 4 einsteckbar und in diesem auswechselbar bei 15 fixiert werden kann.

Die die Schrägverzahnungen 5,5' aufweisenden Elemente, von denen eines in Fig.4 in Draufsicht dargestellt ist, können zum Einen am Rohrstück 6 und zum Anderen am Rohr 7 des Stieles 2 angeschweißt oder auch bei einer aufsteckbaren Ausbildung im Sinne der Fig.5 durch Klemmverschraubungen 12 fixiert sein.

Bevorzugt wird die Ausführungsfrom nach Fig.6. Auch hierbei sitzt der Zapfen 4 in einem am Griff 3 angeordneten Rohrstück 6 und ragt aus diesem heraus. In den aus entsprechendem Rohr 7 gebildeten Stiel 2 greift das herausragendem Endstück 8 des Zapfens 4 ein, und ferner sind die den Zapfen 4 und den Stiel 2 umgebenden Schrägverzahnungen 5,5' an gegeneinander gerichteten Stirnflächen zweier Hülsen 9,10 angeordnet, von denen die eine Hülse 9 am Rohrstück 6 des Handgriffes 3 und die andere Hülse 10 benachbart dazu am den Stiel 2 bildenden Rohr 7 befestigt ist.

Durch diese Ausbildung ergibt sich, wie ohne weiteres vorstellbar, eine äußerst zweckmäßige und kostengünstige Herstellbarkeit insbesondere der Schrägverzahnungen 5,5', die problemlos stirnseitig an den Hülsen 9,10 anbringbar sind und die außerdem dadurch ebenfalls problemlos gehärtet werden können. Hinzu kommt noch, daß im Falle eines Verschleißes der Schrägversahnungen 5,5' die Hülsen 9,10 ausgetauscht werden können. Ferner kann in Betracht gezogen werden, einen Hülsensatz gegen einen anderen auszutauschen, dessen Schrägverzahnung entgegengesetzt orientiert ist, um die Drehung des Handgriffes 3 für Linkshänder zu erleichtern, die ja normalerweise die Neigung haben werden, den Handgriff unter Belastung im Gegenuhrzeigersinn zu drehen.

Was den Zapfen 4 des Handgriffes 3 zur axialen Verstellbegrenzung in Bezug auf den Stiel 2 betrifft, so ist dieser für den Eingriff mindestens eines Verstellanschlages 11 mit einer, wie vorbeschrieben, umlaufenden Nut 12 (siehe auch Fig.2) zu versehen, wobei vorteilhaft diese Verstellanschläge 11 gleichzeitig als Fixierungselemente für die Festlegung der Hülse 10 am den Stiel 2 bildenden Rohr 7 ausnutzbar sind. Die Festlegung der oberen Hülse 9 am Rohrstück 6 erfolgt, wie dargestellt, mit Schrauben 13, die in entsprechende Gewindelöcher 16 im Zapfen 4 einschraubbar sind.

Abschließend sei darauf hingewiesen, daß der Zapfen 4 auch umgekehrt angeordnet werden kann, d.h., dieser kann auch fest im Rohr 7 des Stieles 2 angeordnet sein und mit seinem herausragenden Ende in das am Handgriff 3 angesetzte Rohrstück 6 eingreifen. Am Bau- und Funktionsprinzip, wie vorbeschrieben, ändert sich dabei nichts.

## Patentansprüche

1. Haltestiel für drehend zur Wirkung zu bringende Erdbodenbearbeitungselemente (1), wie Erdbohrer, Bodenauflockerungsgeräte, Pflanzlochstecher od.dgl., bestehend aus einem quer am oberen Ende des Stieles (2) angeordneten, in Schritten verrastund zum Stiel (2) drehbaren Griff (3),
**dadurch gekennzeichnet,**
**daß** der Griff (3) mittels eines in das hohle obere Ende des Stieles (2) eingreifenden und mittig am Griff angeordneten Zapfens (4) durch Drehung begrenzt axial zum Stiel (2) verstellbar ist und daß am Zapfen (4) und am Stiel (2) gegeneinander gerichtete, miteinander in Eingriff bringbare und Zapfen (4) und Stiel ringförmig umgebende sägezahnartige Schrägverzahnungen (5,5') angeordnet sind.

2. Haltestiel nach Anspruch 1,
**dadurch gekennzeichnet,**
**daß** der Zapfen (4) in einem am Griff (3) angeordneten Rohrstück (6) angeordnet ist, aus diesem herausragt und in den aus entsprechendem Rohr (7) gebildeten Stiel (2) mit seinem herausragendem Endstück (8) eingreift.

3. Haltestiel nach Anspruch 2,
**dadurch gekennzeichnet,**
**daß** die den Zapfen (4) und den Stiel (2) umgebenden Schrägverzahnungen (5,5') die Stirnflächen zweier Hülsen (9,10) bilden, von denen die eine (9) am Rohrstück (6) des Handgriffes (3) und die andere (10) benachbart dazu am Stiel (2) befestigt ist.

4. Haltestiel nach einem der Ansprüche 1 bis 3,
**dadurch gekennzeichnet,**
**daß** der Zapfen (4) zur axialen Verstellbegrenzung in Bezug auf den Stiel (2) und für den Eingriff mindestens eines Verstellanschlages (11) mit einer umlaufenden Nut (12) versehen ist.

5. Haltestiel nach Anspruch 3 oder 4,
**dadurch gekennzeichnet,**
**daß** die Hülse (10) mit dem mindestens einen Verstellanschlagen (11) am Rohr (7) des Stieles (2) fixiert ist.

6. Haltestiel nach einem der Ansprüche 3 bis 5.
**dadurch gekennzeichnet,**
**daß** die Hülse (9) mittels mindestens einer das Rohrstück (6) durchgreifenden und in den Zapfen (4) eindrehbaren Schraube (13) am Rohrstück (6) fixiert iswt.

7. Haltestiel nach einem der Ansprüche 3 bis 6,
**dadurch gekennzeichnet,**
**daß** die beiden Hülsen (9,10) identisch ausgebildet sind.

8. Haltestiel nach einem der Ansprüche 1 bis 7,
**dadurch gekennzeichnet,**
**daß** die Schrägverzahnungen (5,5') gehärtet sind.
